# EUROPÄISCHE PATENTANMELDUNG

(11) **EP 2 267 882 A1**
(43) Veröffentlichungstag der Anmeldung: **29.12.2010**
(21) Anmeldenummer: 09163651.4
(22) Anmeldetag: 24.06.2009
(51) Int. Cl.: H02P 6/00, H02P 6/08, H02P 25/02, H02M 1/42

(54) **"Verfahren und Steuersystem zum Ansteuern eines bürstenlosen Elektromotors"**

(71) Anmelder: ebm-papst Mulfingen GmbH & Co. KG, 74673 Mulfingen (DE)
(72) Erfinder: Wystup, Ralph, 74653, Künzelsau (DE); Lipp, Helmut, 74677, Dörzbach-Hohebach (DE)
(74) Vertreter: Patentanwälte Dr. Solf & Zapf

(57) **Zusammenfassung**

Die vorliegende Erfindung betrifft ein Verfahren sowie ein Steuersystem zum Ansteuern eines bürstenlosen, elektronisch kommutierten, insbesondere dreisträngigen Elektromotors (2), wobei eine Netzwechselspannung (U_{N}) gleichgerichtet und über einen schlanken Zwischen kreis (8) mit minimaler Zwischenkreis-Reaktanz als Zwischenkreisspannung (U_{Z}) einem Wechselrichter (10) zugeführt wird, der zur Speisung und Kommutierung des Elektromotors (2) ansteuerbar ist. Eine zunächst durch Gleichrichten der Netzwechselspannung (U_{N}) erzeugte, pulsierende Gleichspannung (U_{G}) wird derart bezüglich ihrer Augenblickswerte dynamisch erhöht, dass die daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt. Das Steuersystem besteht aus einem Netzgleichrichter (6), einem nachgeschalteten schlanken Zwischenkreis (8) mit minimaler Zwischen kreis-Reaktanz sowie einem über den Zwischenkreis gespeisten und zur Kommutierung des Elektromotors (2) ansteuerbaren Wechselrichter (10). Darin ist ein Hochsetzsteller (18) mit einer derart ausgelegten Steuerung (20) integriert, dass im Sinne des obigen Verfahrens die über den Netzgleichrichter (6) gleichgerichtete, pulsierende Gleichspannung (U_{G}) bezüglich ihrer Augenblickswerte derart dynamisch erhöht wird, dass die daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt.

## Beschreibung

Die vorliegende Erfindung betrifft zunächst gemäß dem Oberbegriff des Anspruchs 1 ein Verfahren zum Ansteuern eines bürstenlosen, elektronisch kommutierten, insbesondere dreisträngigen Elektromotors, wobei eine Netzwechselspannung gleichgerichtet und über einen schlanken Zwischenkreis mit minimaler Zwischenkreis-Reaktanz als Zwischenkreisspannung einem Wechselrichter zugeführt wird, der zur Speisung und Kommutierung des Elektromotors ansteuerbar ist.

Ferner betrifft die Erfindung gemäß dem Oberbegriff des Anspruchs 6 auch ein entsprechendes Steuersystem, insbesondere unter Anwendung des erfindungsgemäßen Verfahrens, mit einem Netzgleichrichter, einem nachgeschalteten schlanken Zwischenkreis mit minimaler Zwischenkreis-Reaktanz sowie mit einem über den Zwischenkreis gespeisten und zur Kommutierung des Elektromotors ansteuerbaren Wechselrichter.

Elektronisch kommutierte Motore, so genannte EC-Motore, werden häufig als Lüfterantriebe eingesetzt. Diese Antriebe bestehen im Allgemeinen aus einem permanentmagneterregten Synchronmotor (PMSM) mit integrierter Leistungs- und Signalelektronik. Hierbei handelt es sich häufig um Außenläufermotore.

Solche Elektromotore können an einer einphasigen oder dreiphasigen Netzwechselspannung betrieben werden, indem die Netzwechselspannung zunächst zu einer Zwischenkreisspannung gleichgerichtet wird, die dann über einen gesteuerten Wechselrichter in eine Motor-Betriebsspannung zur Versorgung und Kommutierung des Motors umgesetzt wird.

Um ein möglichst gleichförmiges, konstantes Motor-Drehmoment mit minimaler Welligkeit und dadurch ein günstiges Geräuschverhalten (insbesondere bei Lüfter-Antrieben) zu erreichen, sollte die Zwischenkreisspannung eine möglichst konstante Gleichspannung sein. Dazu wurde bisher die über einen Netzgleichrichter gleichgerichtete und stark pulsierende Gleichspannung über mindestens einen Glättungskondensator und gegebenenfalls eine zusätzliche Siebdrossel geglättet. Der Glättungskondensator muss dazu eigentlich eine relativ große Kapazität (z. B. mehrere Hundert µF) aufweisen, so dass üblicherweise Elektrolytkondensatoren (Elkos) eingesetzt wurden. Diese haben aber im praktischen Einsatz einige Nachteile, und zwar insbesondere ein großes Bauvolumen und eine geringe Lebensdauer.

Deshalb besteht heute zunehmend die Tendenz, entweder gänzlich auf Glättungskondensatoren oder zumindest auf Elektrolytkondensatoren zu verzichten, wobei im zweiten Fall längerlebige Folienkondensatoren mit geringerer Kapazität (nur bis zu einigen µF) eingesetzt werden. Hierbei wird von einem "schlanken Zwischenkreis" gesprochen, wobei auf eine Entkoppelung von Netz- und Motorseite durch Speicherbauteile, wie Kondensatoren und Drosseln (Reaktanzen), ganz oder zumindest weitgehend verzichtet wird. Dies bedeutet, dass ein schlanker Zwischenkreis keine oder nur eine minimale Zwischenkreis-Reaktanz enthält.

Mit dieser Technologie des "schlanken Zwischenkreises" treten vor allem bei Versorgung aus dem einphasigen Netz besondere Probleme auf, weil die gleichgerichtete Gleichspannung sehr stark mit einer Frequenz von 100 Hz pulsiert, deren Spannungsverlauf dem Betrag der sinusförmigen Netzwechselspannung entspricht. Würde nun ein EC-Motor (PMSM) direkt mit einer solchen stark pulsierenden Gleichspannung versorgt, so könnte unterhalb einer bestimmten Grenzspannung kein Motorstrom in den Motorwicklungen eingeprägt werden. Die Konsequenz wäre ein Absinken des Drehmomentes.

Um das Drehmoment trotz der welligen Zwischenkreis-Gleichspannung möglichst konstant zu halten, sind einige Möglichkeiten bekannt.

So kann das Drehmoment durch eine Stromregelung konstant gehalten werden. Nachteilig ist hierbei, dass dazu die Motorströme erfasst werden müssen, und dass eine zu schnelle Stromregelung ein System aus Netzinduktivität und Zwischenkreiskondensator zum Schwingen anregen kann. Die Folge wäre eine noch stärker pulsierende Zwischenkreisspannung.

Es ist weiterhin bekannt (vgl. beispielsweise die Literaturstelle "Verlustarmer Umrichter ohne Zwischenkreis-Kondensator" von B. Piepenbreier und L. Sack in "Elektronik 2006 Nr. 1 ", Seiten 61 bis 67), in Kombination mit dem Wechselrichter des EC-Motors gesteuerte Gleichrichter einzusetzen. Realisiert wird dies konkret durch spezielle Matrixumrichter mit gesteuerten Gleichrichtern. Der Nachteil dieser-grundsätzlich gut funktionierenden - Anordnung sind Mehrkosten durch die zusätzlichen steuerbaren Halbleiter, welche sich besonders bei großen Stückzahlen sehr bemerkbar machen.

Der vorliegenden Erfindung liegt die Aufgabe zu Grunde, auf eine technisch günstige Weise und mit einfachen und kostengünstig realisierbaren Mitteln den Betrieb eines elektronisch kommutierten Elektromotors (EC-Motors) mit "schlankem Zwischenkreis" zu optimieren.

Erfindungsgemäß wird dies durch ein Verfahren gemäß Anspruch 1 erreicht. Ein zur Anwendung des Verfahrens geeignetes Steuersystem ist Gegenstand des Anspruchs 6. Vorteilhafte Ausgestaltungen der Erfindung sind in den abhängigen Ansprüchen sowie in der nachfolgenden Beschreibung enthalten.

Erfindungsgemäß wird demnach die zunächst durch Gleichrichten der Netzwechselspannung erzeugte, pulsierende, d. h. über die Zeit nicht konstante Gleichspannung bezüglich ihrer Augenblickswerte derart dynamisch - insbesondere über einen Hochsetzsteller - erhöht, dass die daraus resultierende Zwischenkreisspannung über ihren zeitlichen Verlauf hinweg mit reduzierter Welligkeit stets oberhalb einer bestimmten Grenzspannung liegt. Als Grenzspannung wird diejenige Spannung vorgegeben, die bei dem jeweiligen Elektromotor ausreicht, über den Wechselrichter über den gesamten Phasenverlauf hinweg stets einen Motorstrom in die Wicklungen einzuprägen. Bei geeigneter Auslegung des Hochsetzstellers und dessen Steuerung kann vorteilhafterweise aus der stark pulsierenden Gleichspannung eine quasikonstante Gleichspannung erzeugt werden. Dazu wird die pulsierende Gleichspannung mit einem anhand der jeweils aktuellen Zwischenkreisspannung geregelten Taktverhältnis getaktet auf eine Induktivität geschaltet, und über eine der Induktivität nachgeschaltete Freilaufdiode und einen Zwischenkreiskondensator wird die Zwischenkreisspannung aufsummiert. Für den Zwischenkreiskondensator genügt ein kleiner und kostengünstiger Folienkondensator, in der Größe von nur einigen µF.

Da die für die Funktion des Hochsetzstellers erforderliche Induktivität eigentlich der "Philosophie eines schlanken Zwischenkreises" widerspricht, ist in besonders vorteilhafter Ausgestaltung der Erfindung vorgesehen, dass als Induktivität für den Hochsetzsteller im Elektromotor ohnehin zwangsläufig vorhandene Streuinduktivitäten von Motor-Wickelköpfen genutzt werden. Auf diese Weise kann innerhalb des schlanken Zwischenkreises vorteilhafterweise eine zusätzliche Induktivität entfallen. Um für den Hochsetzsteller die Streuinduktivitäten des Motors nutzen zu können, wird nur in Phasen der Kommutierungssteuerung des Wechselrichters ein Hochsetzsteller-Betrieb durchgeführt, in denen alle Wicklungen des Elektromotors kurzgeschlossen sind. In den übrigen, verbleibenden Phasen der Kommutierungssteuerung erfolgt eine übliche Ansteuerung zur Drehmomenterzeugung durch Raumzeigermodulation zur Erzeugung eines Drehfeldes.

Ein erfindungsgemäßes Steuersystem besteht zunächst aus den für eine EC-Steuerung üblichen Bestandteilen, und zwar einem Netzgleichrichter und einem über einen Zwischenkreis nachgeschalteten Wechselrichter, der zur Erzeugung von quasisinusförmig verlaufenden Motorströmen zur entsprechenden Spannungstaktung (Modulation) von einer PWM-Steuerung angesteuert wird. Erfindungsgemäß weist das Steuersystem nun einen integrierten Hochsetzsteller mit einer derart ausgelegten Steuerung auf, dass im Sinne des erfindungsgemäßen Verfahrens eine über den Netzgleichrichter gleichgerichtete, pulsierende Gleichspannung bezüglich ihrer Augenblickswerte derart dynamisch erhöht wird, dass eine daraus resultierende Zwischenkreisspannung über ihren zeitlichen Verlauf hinweg mit reduzierter Welligkeit stets oberhalb einer bestimmten Grenzspannung liegt. Der Hochsetzsteller weist eine Induktivität in Reihe mit einer Freilaufdiode und mit einem nachgeschalteten Zwischenkreis-Kondensator auf, wobei die Induktivität über einen steuerbaren elektronischen Schalter getaktet mit der pulsierenden Gleichspannung beaufschlagbar ist. Dabei wird der elektronische Schalter zur Taktung der Induktivität pulsweitenmoduliert von einem Spannungsregler mit variabler Taktfrequenz angesteuert, und zwar in Abhängigkeit von der jeweils aktuellen Zwischenkreisspannung sowie in Abhängigkeit von der vorbestimmten Grenzspannung.

In bevorzugter Ausgestaltung aktiviert die Steuerung den Hochsetzsteller nur in Phasen der Kommutierung, in denen alle Wicklungen des Elektromotors kurzgeschlossen sind. Dadurch können vorhandene Streuinduktivitäten von Motor-Wickelköpfen als Induktivität für den Hochsetzsteller verwendet werden.

Anhand der Zeichnungen soll die Erfindung im Folgenden beispielhaft genauer erläutert werden. Dabei zeigen:
- Fig. 1: ein Schaltbild eines erfindungsgemäßen Steuersystems mit integriertem Hochsetzsteller in einer ersten Ausführungsform,
- Fig. 2: ein Spannungsdiagramm zur Funktionsbeschreibung,
- Fig. 3: ein vereinfachtes Schaltbild zur Erläuterung der Hochsetzsteller-Funktion,
- Fig. 4: ein Schaltbild einer bevorzugten Ausgestaltung des erfindungsgemäßen Steuersystems,
- Fig. 5: Ersatzschaltbilder einer dreisträngigen Motorwicklung in einem kurzgeschlossenen Zustand,
- Fig. 6: ein Prinzipschaltbild eines Wechselrichters in einer Ersatz-Umschalter-Darstellung,
- Fig. 7: eine Tabelle mit Schalterzuständen zur Kommutierung des Elektromotors durch Raumzeigermodulation zur Drehfeldbildung,
- Fig. 8: ein Diagramm zur Darstellung von Raumzeigern aus Fig. 7 im statorfesten kartesischen Koordinatensystem,
- Fig. 9: ein Diagramm wie in Fig. 8 zur weiteren Erläuterung der Bildung eines kreisförmig umlaufenden Raumzeigers,
- Fig. 10: ein Steuerdiagramm einer möglichen Schaltsequenz für einen Raumzeiger und
- Fig. 11: ein gegenüber Fig. 4 stark vereinfachtes Schaltbild des erfindungsgemäßen Steuersystems im Hochsetzsteller-Modus (Kurzschluss-Phase der Wicklungen).

In den verschiedenen Figuren der Zeichnung sind gleiche Teile, Komponenten und Größen stets mit den gleichen Bezugszeichen versehen.

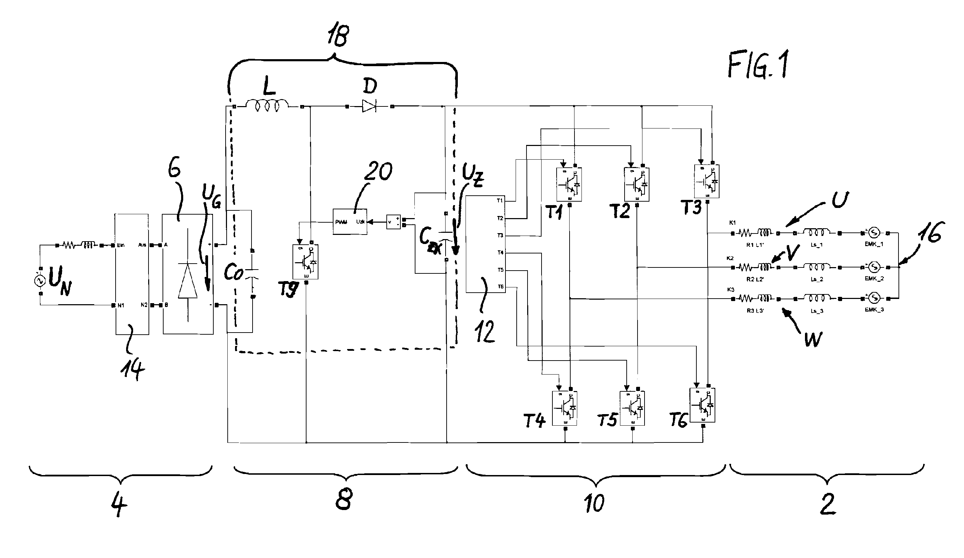

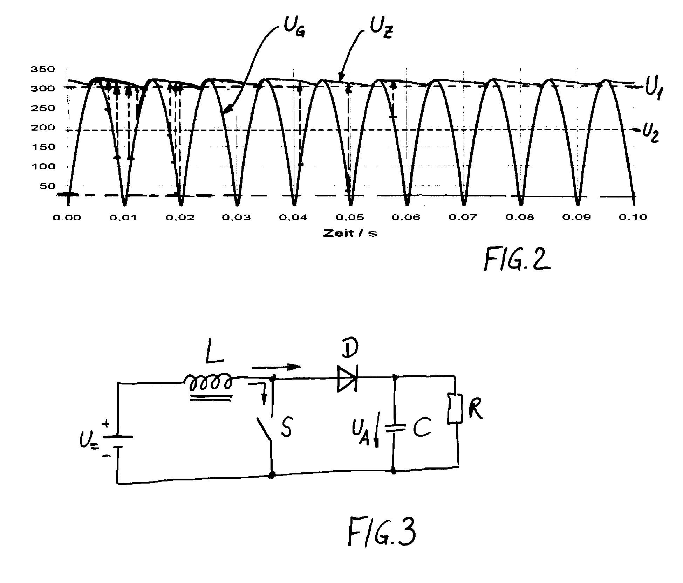

Wie sich zunächst aus Fig. 1 ergibt, besteht ein erfindungsgemäßes Steuersystem zum Ansteuern eines kollektorlosen, elektronisch kommutierten Elektromotors 2 (EC-PMSM = Elektronisch kommutierter permanentmagneterregter Synchronmotor) aus einer Netzspannungsversorgung 4, die eine Netzwechselspannung U_{N} über einen Netzgleichrichter 6 zu einer pulsierenden Gleichspannung U_{G} gleichrichtet (vgl. dazu das Diagramm in Fig. 2). Die Netzspannungsversorgung 4 versorgt über einen Zwischenkreis 8 einen gesteuerten Wechselrichter 10 (Leistungsendstufe), der in an sich bekannter Weise von einer Steuereinheit 12 zur Speisung und Kommutierung sowie insbesondere auch zur Drehzahleinstellung des Motors 2 gesteuert wird.

In Fig. 1 ist im Bereich der Netzspannungsversorgung 4 zusätzlich ein Netzfilter 14 eingezeichnet, das hochfrequente Stromschwingungen reduziert und somit die elektromagnetische Verträglichkeit (EMV) verbessert. Von dem - bevorzugt dreisträngigen - Elektromotor 2 sind nur drei Stator-Wicklungsstränge U, V, W in Ersatzschaltbild-Darstellung gezeigt, wobei hier eine Sternschaltung mit einem gemeinsamen Sternpunkt 16 vorgesehen ist. Sonstige Bestandteile des Elektromotors 2, wie sein permanentmagnetischer Rotor, sind in den Zeichnungen zur Vereinfachung nicht dargestellt. Der Wechselrichter 10 besteht aus einer Brückenschaltung (Drehstrom-Vollbrücke) mit sechs elektronischen Schaltern T1 bis T6.

Erfindungsgemäß weist nun das Steuersystem einen in den Zwischenkreis 8 integrierten Hochsetzsteller 18 auf (häufig auch Aufwärtswandler genannt), der die stark pulsierende Gleichspannung U_{G} in eine nahezu konstante, allenfalls eine geringfügige Rest-Welligkeit aufweisende Zwischenkreisspannung U_{Z} zur Versorgung des Wechselrichters 10 umformt (s. Fig. 2). Dazu wird die pulsierende Gleichspannung U_{G} bezüglich ihrer Augenblickswerte derart dynamisch über den Hochsetzsteller 18 erhöht (in Fig. 2 durch einige gestrichelte Pfeile angedeutet), dass die daraus resultierende Zwischenkreisspannung U_{Z} über ihren zeitlichen Verlauf hinweg mit reduzierter Welligkeit stets oberhalb einer bestimmten Grenzspannung liegt. In Fig. 2 sind beispielhaft zwei verschiedene Grenzspannungen U₁ und U₂ durch gestrichelte Geraden eingezeichnet. Die jeweilige Grenzspannung wird motorspezifisch vorgegeben; es handelt sich um diejenige Spannung, die mindestens erforderlich ist, um über die Zeit hinweg stets einen Motorstrom im Motor 2 einzuprägen.

Das allgemeine Funktionsprinzip eines Hochsetzstellers bzw. Aufwärtswandlers soll anhand der Fig. 3 erläutert werden. Grundsätzlich handelt es sich um einen Gleichspannungswandler, der eine Gleichspannung U₌ in eine höhere Ausgangsspannung U_{A} umformen kann. Dazu ist eine Induktivität L (Spule) in Reihe mit einer Freilaufdiode D geschaltet, hinter der ein Ladekondensator C die Ausgangsspannung U_{A} aufsummiert. Die Induktivität L wird dazu über einen Schalter S mit einer bestimmten Taktfrequenz alternierend an die Gleichspannung U₌ geschaltet, wobei jeweils Energie in der Induktivität L gespeichert wird. Wird der Schalter S jeweils geöffnet, hält die Induktivität L den Stromfluss aufrecht, so dass über die Diode D der Ladekondensator C auf die Ausgangsspannung U_{A} zur Versorgung einer Last R geladen wird.

Im Falle des erfindungsgemäßen Steuersystems und seines integrierten Hochsetzstellers 18 ist allerdings über das allgemeine Funktionsprinzip hinausgehend vorgesehen, dass der hier vorhandene elektronische Schalter T9 auf eine besondere Weise von einem Spannungsregler 20 gesteuert wird, und zwar mit einer hinsichtlich der Taktfrequenz veränderbaren PWM-Taktung, wobei die Taktfrequenz in Abhängigkeit von dem zeitlich nicht konstanten Verlauf der pulsierenden Gleichspannung U_{G} und von dem jeweils erfassten Ist-Wert der Zwischenkreisspannung U_{Z} sowie von der vorgegebenen Grenzspannung U₁ bzw. U₂ dynamisch so gesteuert wird, dass die pulsierende Gleichspannung U_{G} bezüglich ihrer Augenblickswerte jeweils dynamisch so angehoben wird, dass die resultierende Zwischenkreisspannung U_{Z} stets oberhalb der jeweiligen Grenzspannung U₁/U₂ liegt.

Zur aufsummierenden Speicherung der Zwischenkreisspannung U_{Z} ist hinter der Freilaufdiode D ein Zwischenkreiskondensator C_{Zk} angeordnet. Bevorzugt liegt zusätzlich unmittelbar hinter dem Netzgleichrichter 6 ein zweiter Kondensator C₀. Die beiden parallelen Kapazitäten C₀ und C_{Zk} im Steuersystem mit Hochsetzsteller 18 sind allerdings in der Summe deutlich kleiner als eine Kapazität, die notwendig wäre, um die Zwischenkreisspannung U_{Z} ohne den erfindungsgemäßen Hochsetzsteller 18 oberhalb der jeweiligen Grenzspannung U₁/U₂ zu halten. Die Kapazität C₀ am Ausgang des Netzgleichrichters 6 dient zur besseren Regelbarkeit des Hochsetzstellers 18, und sie liegt im Bereich von nur wenigen µF.

Bei der Ausführung gemäß Fig. 1 wird durch die zusätzliche, im Zwischenkreis 8 liegende Induktivität L die Reaktanz im Zwischenkreis 8 erhöht. Dies steht eigentlich im Gegensatz zu dem grundsätzlich angestrebten "schlanken Zwischenkreis", der eine möglichst geringe Reaktanz enthalten soll.

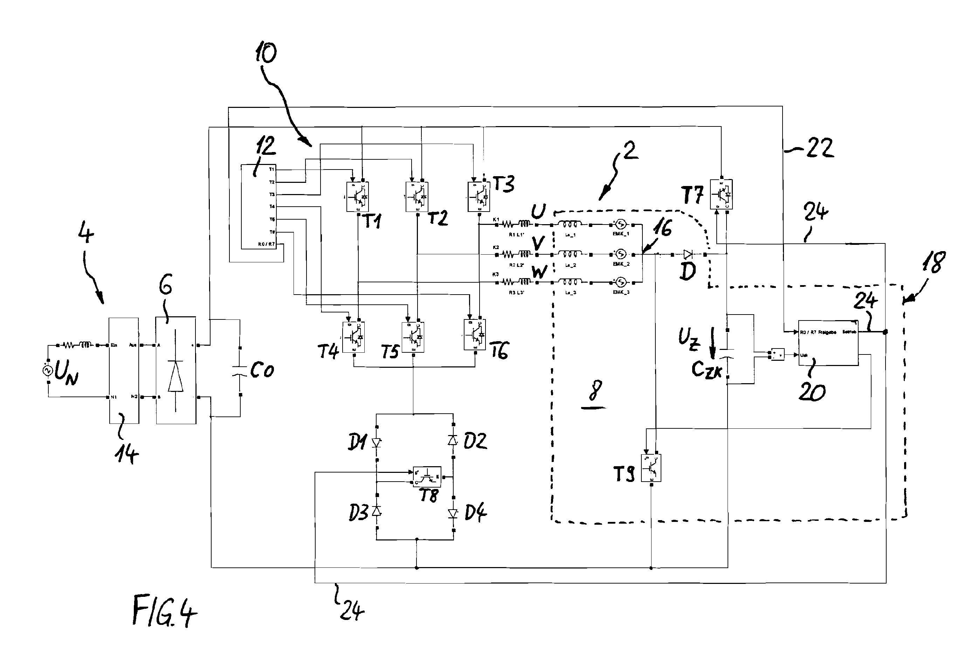

Deshalb ist gemäß Fig. 4 bevorzugt vorgesehen, den Hochsetzsteller 18 mit den ohnehin im Motor 2 vorhandenen Streuinduktivitäten der Wickelköpfe der Motorwicklungen zu realisieren. Dadurch können vorteilhafterweise zusätzliche Induktivitäten im Zwischenkreis 8 entfallen, wodurch die Zwischenkreis-Reaktanz vorteilhaft gering gehalten werden kann.

Der allgemeine Ansatz für diese erfindungsgemäße Ausgestaltung kann so definiert werden, dass magnetische Energie in den Streuinduktivitäten der Wickelköpfe des Stators gespeichert wird, um diese zum Hochsetzen der Zwischenkreisspannung U_{Z} zu verwenden.

Diese Ausgestaltung sowie die technischen Hintergründe sollen nun anhand der Figuren 4 bis 11 genauer erläutert werden.

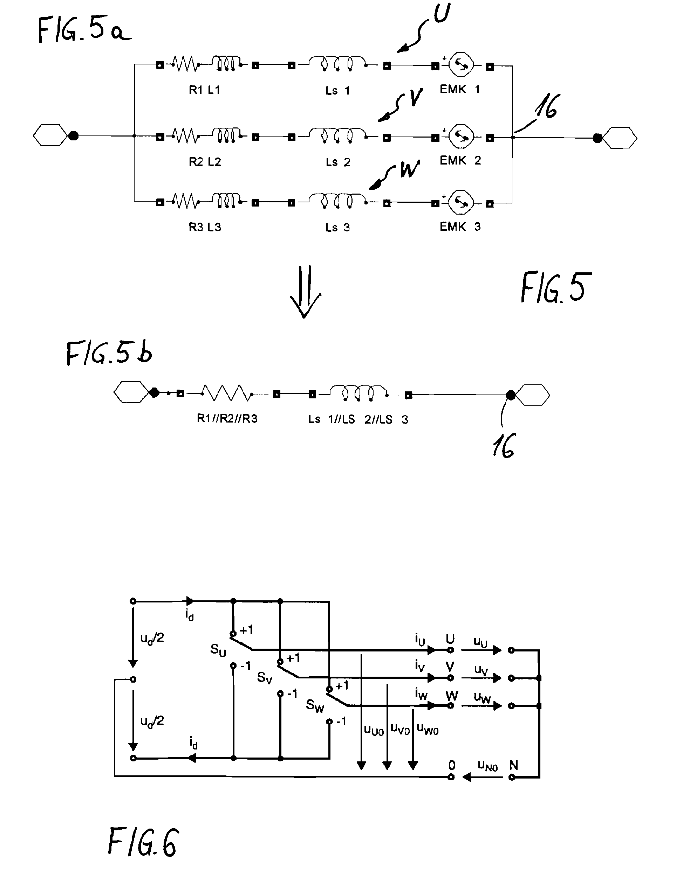

Der dreisträngige Elektromotor 2 ist in Fig. 4 (sowie auch in Fig. 1) als Ersatzschaltbild mit seinen Wicklungsimpedanzen R1, L1, Ls1 bis R3, L3, Ls3 sowie mit den induzierten EMK's EMK1 bis EMK3 dargestellt. Die Wicklungsinduktivitäten teilen sich jeweils in einen symmetrischen Anteil L1 bis L3 und einen unsymmetrischen Anteil Ls1 bis Ls3 auf. Werden die Wicklungsstränge mit ihren Klemmen kurzgeschlossen, kann gegen den Sternpunkt 16 nur der unsymmetrische Anteil der parallel geschalteten Wicklungsinduktivitäten - hauptsächlich verursacht durch die Streuinduktivitäten der Wickelköpfe - gemessen werden. Die symmetrischen Induktivitäten entfallen, da sich ihre magnetischen Flüsse im Falle eines Klemmen-Kurzschlusses gegenseitig aufheben. Dieser Sachverhalt ist in Fig. 5 dargestellt. Fig. 5a zeigt alle drei Wicklungsstränge U, V, W mit ihren anteiligen Impedanzen und EMK's. Durch Kurzschluss der Wicklungsstränge entsteht effektiv das in Fig. 5b dargestellte Ersatzschaltbild, wobei nur noch die Ohmschen Anteile R1 bis R3 sowie die Streuinduktivitäten Ls1 bis Ls3 wirksam sind. Die übrigen Anteile heben sich gegenseitig auf.

Erfindungsgemäß soll nun der Anteil der Streuinduktivitäten Ls1 bis Ls3 gemäß Fig. 5b als Induktivität L für den Hochsetzsteller 18 verwendet werden.

Dazu ist erfindungsgemäß vorgesehen, den Hochsetzsteller 18 nur in Phasen der Kommutierungssteuerung des Wechselrichters 10 zu betreiben, in denen über die entsprechenden Schalter T1 bis T6 des Wechselrichters 10 alle Wicklungsstränge U, V, W des Elektromotors 2 kurzgeschlossen sind. In den übrigen, verbleibenden Phasen der Kommutierungssteuerung erfolgt dann eine übliche Ansteuerung des Wechselrichters 10 zur Drehmomenterzeugung durch eine übliche Raumzeigermodulation zur Erzeugung eines Drehfeldes.

Um diese in sich verschachtelten Betriebsphasen vorzusehen, kann das Steuersystem gemäß dem in Fig. 4 dargestellten Ausführungsbeispiel ausgeführt sein. Im Vergleich zu der ersten Ausführungsform gemäß Fig. 1 ist gemäß Fig. 4 zusätzlich vorgesehen, dass die Steuereinheit 12 des Wechselrichters 10 über eine zusätzliche Steuerleitung 22 den Spannungsregler 20 des Hochsetzstellers 18 in den Kommutierungsphasen aktiviert, in denen die Wicklungsstränge U, V, W kurzgeschlossen sind. In diesen Phasen wird dann zusätzlich der Wechselrichter 10 über einen Schalter T7 von dem Zwischenkreis 8 getrennt. Bei der dargestellten Ausführung wird zudem auch der Wechselrichter 10 - wegen der zu den von Bipolartransistoren gebildeten Schaltern T4 bis T6 parallelen Freilaufdioden - über einen Schalter T8 von Masse getrennt. Der Schalter T8 ist als unipolarer Schalter ausgeführt. Bei der dargestellten Ausführung ist als Schalter T8 ein üblicher Bipolartransistor mit einer Dioden-Brücke D1 bis D4 vorgesehen. Diese spezielle Beschaltung kann entfallen, wenn an dieser Stelle unmittelbar ein unipolarer Schalter ohne Freilaufdioden eingesetzt wird, insbesondere ein FET. Zudem könnte der Schalter T8 auch gänzlich entfallen, wenn für die "unteren" Schalter T4 bis T6 des Wechselrichters 10 unmittelbar unipolare Schalter (wie FET's) eingesetzt werden. Für den normalen Kommutierungsbetrieb wird dann der Spannungsregler 20 für den Hochsetzsteller 18 über die Steuerleitung 22 deaktiviert, und es wird die Zwischenkreisspannung des Zwischenkreiskondensators C_{Zk} über den Schalter T7 und gegebenenfalls den Schalter T8 auf den Wechselrichter 10 geschaltet. Die Schalter T7 und gegebenenfalls T8 werden bevorzugt von dem Spannungsregler 20 je nach dessen Betriebszustand über eine Steuerverbindung 24 gesteuert.

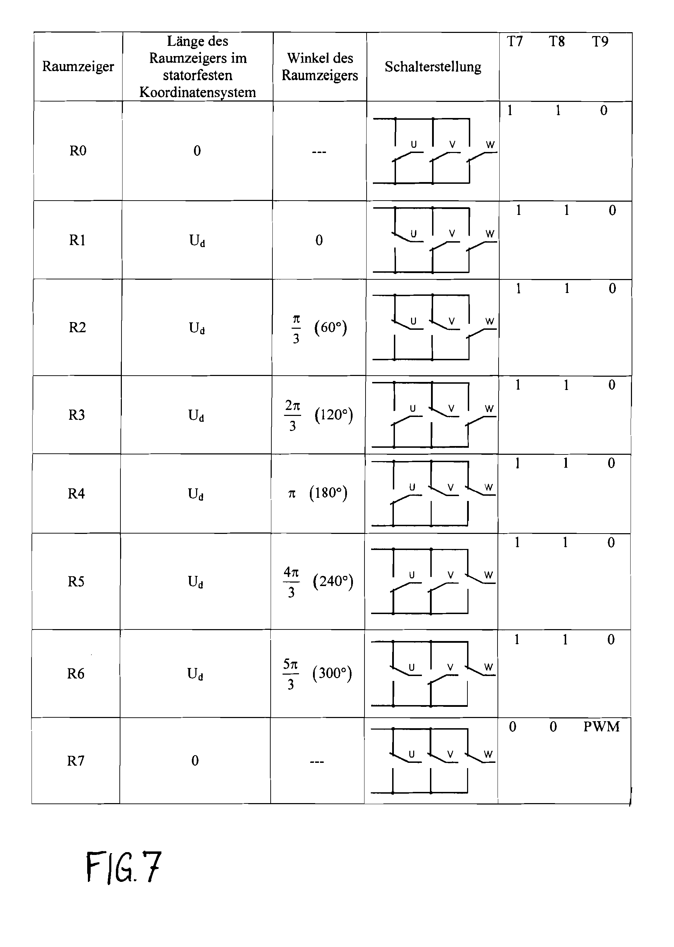

Der Vollständigkeit halber sei nun die Funktionsweise der üblichen Kommutierungssteuerung durch Raumzeigermodulation erläutert, welche zur Erzeugung eines dreiphasigen Drehfeldsystems dient, um den Elektromotor 2 bzw. dessen Rotor in Rotation zu versetzen. Dazu sind in Fig. 6 die Schalter T1 bis T6 aus Fig. 4 durch Umschalter Su, Sv, Sw ersetzt. Diese Umschalter und die zusätzlichen Schalter (Transistoren) T7 bis T9 gemäß Fig. 4 können die Zustände gemäß Fig. 7 annehmen. Dadurch werden rotierende Spannungs-Raumzeiger R0 bis R7 erzeugt.

Werden die Schalterkombinationen gemäß R1 bis R6 der Reihe nach geschaltet, lässt sich mit Hilfe der räumlichen Anordnung der Wicklungsstränge ein so genannter Drehzeiger, welcher auch Raumzeiger genannt wird, für die Strangspannungen im statorfesten kartesischen Koordinatensystem bilden. Dieser Spannungsraumzeiger dreht sich zunächst sprungartig und ist die Ursache für einen Stromraumzeiger in den Motorwicklungen, welcher eine Drehdurchflutung bildet. Diese Drehdurchflutung bildet zusammen mit dem Drehfeld des Rotors das den Motor antreibende Luftspaltdrehmoment.

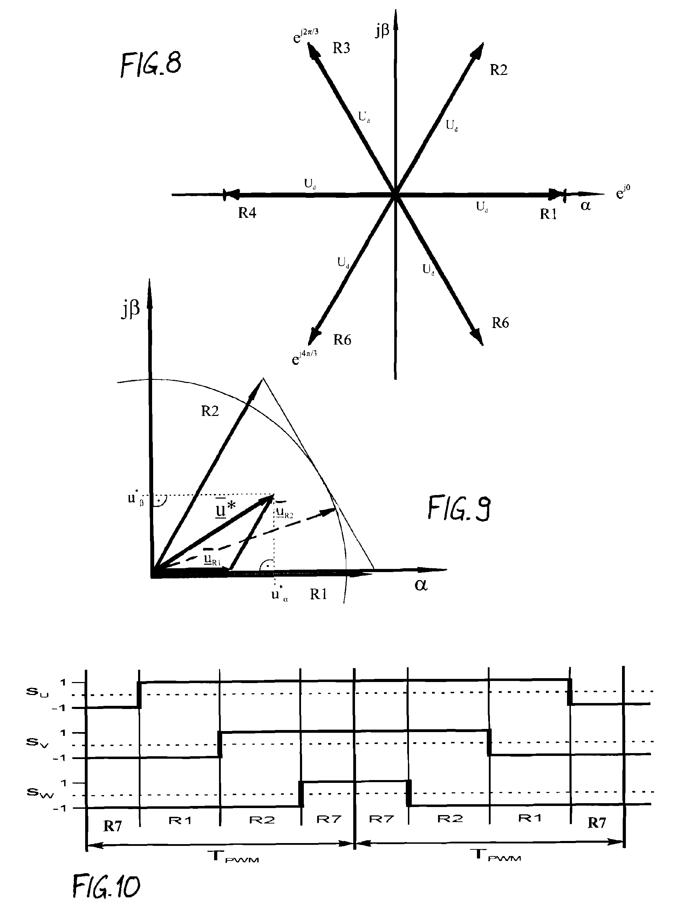

In Fig. 8 sind die entsprechenden Spannungsraumzeiger zu den Schalterzuständen R1 bis R6 gemäß Fig. 7 dargestellt. Die beiden Raumzeiger R0 und R7 gemäß Fig. 7 bilden kein Drehfeld und verlaufen in Fig. 8 senkrecht zur Zeichnungsebene durch den Ursprung des Koordinatensystems.

Da zu jedem Zeitpunkt immer nur ein Raumzeiger aktiv ist, entsteht durch das Schalten zunächst ein springender Raumzeiger, welcher ein sechseckförmiges Drehfeld (Verbindung aller Zeigerspitzen) verursacht, was zu einer unerwünschten Drehmomentwelligkeit führen würde.

Um ein konstantes Drehmoment zu erzeugen, muss der Raumzeiger kreisförmig ohne Sprünge umlaufen. Dies wird erreicht, indem aus jeweils zwei benachbarten Raumzeigern, den so genannten Elementarzeigern, ein resultierender Zeiger gebildet wird, welcher auf einer Kreisbahn umläuft. Die Bildung eines resultierenden Raumzeigers geschieht dadurch, dass die benachbarten Elementarzeiger schnell ein- und ausgeschaltet werden und sich somit im arithmetischen Mittel ein resultierender Raumzeiger bildet. Dieser Vorgang ist in Fig. 9 veranschaulicht. Eine typische Schaltsequenz zur Bildung eines umlaufenden Raumzeigers ist beispielhaft in Fig. 10 dargestellt.

Erfindungsgemäß wird nun für den Hochsetzsteller 18 nur der Nullzeiger R7 benötigt. Grundsätzlich könnte aber auch der Nullzeiger R0 zusätzlich oder alternativ verwendet werden.

Somit ist es vorteilhafterweise möglich, im Zeitintervall, in dem der Null-Raumzeiger R7 aktiv ist, zusätzliche Funktionen, wie insbesondere den Betrieb des Hochsetzstellers 18 zu integrieren, ohne die Erzeugung eines kreisförmigen Drehfeldes zu stören. Bedingung hierfür ist, dass alle Vorgänge, welche vom Hochsetzsteller 18 herrühren, insbesondere der Stromfluss durch die kurzgeschlossenen Motorwicklungen und die daraus herrührende magnetische Belastung, bis zum Einsetzen der drehfeldbildenden Raumzeigerzustände R1 bis R6 abgeklungen sind.

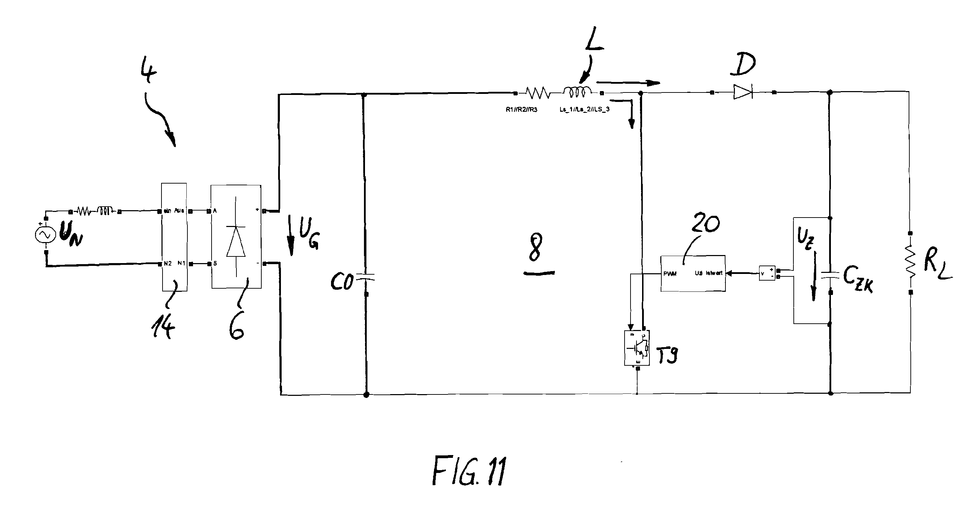

Um die Funktion des Hochsetzstellers 18 gemäß Fig. 4 im Raumzeigerzustand R7 zu verdeutlichen, ist die Schaltung in Fig. 11 in diesem Zustand gezeichnet. Zur Vereinfachung sind nur die in dieser Phase wirksamen Bestandteile dargestellt. Da die Schalter T7 und T8 in dieser Phase permanent ausgeschaltet sind, ist auch der Wechselrichter 10 mit den oberen und unteren Schaltern T1 bis T3 und T4 bis T6 vom Zwischenkreis 8 getrennt. Es liegt dann nur die Ersatzschaltung gemäß Fig. 5b der kurzgeschlossenen Wicklungen im Zwischenkreis 8 und bildet dadurch die Induktivität L für den Hochsetzsteller 18. Der Schalter T9 wird von dem Spannungsregler 20 in der oben bereits beschriebenen Weise PWM-getaktet angesteuert, so dass die Zwischenkreisspannung U_{Z} am Zwischenkreiskondensator C_{Zk} mittels des Hochsetzstellers 18 in einem gewissen Bereich geregelt werden kann. Der in Fig. 11 zusätzlich eingezeichnete Lastwiderstand R_{L} repräsentiert im Grunde den Motor, indem er den Kondensator C_{Zk} ähnlich belastet, wie der Motor in den drehfeldbildenden Raumzeigerzuständen R1 bis R6 den Zwischenkreis 8 belasten würde. Während der drehfeldbildenden Zustände ist der Hochsetzsteller 18 inaktiv, und der Zwischenkreiskondensator C_{Zk} versorgt dann den Motor über die eingeschalteten Schalter T7 und T8.

In einer Weiterbildung der Erfindung können die Wickelkopf-Streuinduktivitäten "künstlich" vergrößert werden, indem beispielsweise Ferritelemente (Bleche) im Wickelkopfbereich angeordnet, z. B. radial eingeschoben werden.

Durch die beschriebene erfindungsgemäße Ausgestaltung kann vorteilhafterweise das Hochsetzstellen unabhängig von der regulären Drehfelderzeugung eingesetzt werden, um die Zwischenkreisspannung über einen kritischen Wert hinaus zu erhöhen und dabei die Welligkeit der Zwischenkreisspannung bei verminderten Reaktanzen im Zwischenkreis zu reduzieren.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Verfahren zum Ansteuern eines bürstenlosen, elektronisch kommutierten, insbesondere dreisträngigen Elektromotors (2), wobei eine Netzwechselspannung (U_{N}) gleichgerichtet und über einen schlanken Zwischenkreis (8) mit minimaler Zwischenkreis-Reaktanz als Zwischenkreisspannung (U_{Z}) einem Wechselrichter (10) zugeführt wird, der zur Speisung und Kommutierung des Elektromotors (2) ansteuerbar ist,
**dadurch gekennzeichnet, dass** eine zunächst durch Gleichrichten der Netzwechselspannung (U_{N}) erzeugte, pulsierende Gleichspannung (U_{G}) derart bezüglich ihrer Augenblickswerte dynamisch erhöht wird, dass die daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt.

2. Verfahren nach Anspruch 1,
**dadurch gekennzeichnet, dass** die pulsierende Gleichspannung (U_{G}) unter Verwendung eines Hochsetzstellers (18) in die Zwischenkreisspannung (U_{Z}) umgesetzt wird, wobei die pulsierende Gleichspannung (U_{G}) mit einem anhand der jeweils aktuellen Zwischenkreisspannung (U_{Z}) geregelten Taktverhältnis getaktet auf eine Induktivität (L) geschaltet wird, und dass über eine der Induktivität (L) nachgeschaltete Freilaufdiode (D) und einen Zwischenkreiskondensator (C_{Zk}) die Zwischenkreisspannung (U_{Z}) aufsummiert wird.

3. Verfahren nach Anspruch 2,
**dadurch gekennzeichnet, dass** als Induktivität(L)fürden Hochsetzsteller (18) im Elektromotor (2) vorhandene Streuinduktivitäten (Ls1 - Ls3) von Motor-Wickelköpfen genutzt werden.

4. Verfahren nach Anspruch 3,
**dadurch gekennzeichnet, dass** ein Hochsetzsteller-Betrieb nur in Phasen der Kommutierungssteuerung des Wechselrichters (10) durchgeführt wird, in denen alle Wicklungen (U, V, W) des Elektromotors (2) kurzgeschlossen sind, und dass in den übrigen, verbleibenden Phasen der Kommutierung eine übliche Ansteuerung der Wicklungen (U, V, W) zur Drehmomenterzeugung erfolgt.

5. Verfahren nach einem der Ansprüche 2 bis 4,
**dadurch gekennzeichnet, dass** die jeweils aktuelle Zwischenkreisspannung (U_{Z}) als Ist-Wert einem Spannungsregler (20) zugeführt wird, der einen elektronischen Schalter (T9) zur Taktung der Induktivität (L) des Hochsetzstellers (18) in Abhängigkeit vom Ist-Wert der Zwischenkreisspannung (U_{Z}) und von der vorbestimmten Grenzspannung (U₁/U₂) pulsweitenmoduliert ansteuert.

6. Steuersystem für einen bürstenlosen, elektronisch kommutierten, insbesondere dreisträngigen Elektromotor (2), insbesondere unter Anwendung des Verfahrens nach einem der vorhergehenden Ansprüche, mit einem Netzgleichrichter (6), einem nachgeschalteten schlanken Zwischenkreis (8) mit minimaler Zwischenkreis-Reaktanz sowie mit einem über den Zwischenkreis gespeisten und zur Kommutierung des Elektromotors (2) ansteuerbaren Wechselrichter (10),
**gekennzeichnet tdurch** einen integrierten Hochsetzsteller (18) mit einer derart ausgelegten Steuerung (20), dass eine über den Netzgleichrichter (6) gleichgerichtete, pulsierende Gleichspannung (U_{G}) bezüglich ihrer Augenblickswerte derart dynamisch erhöht wird, dass eine daraus resultierende Zwischenkreisspannung (U_{Z}) über ihren zeitlichen Verlauf hinweg mit reduzierter Welligkeit stets oberhalb einer bestimmten Grenzspannung (U₁/U₂) liegt.

7. Steuersystem nach Anspruch 6,
**dadurch gekennzeichnet, dass** derHochsetzsteller(18)eine Induktivität (L) in Reihe mit einer Freilaufdiode (D) und mit einem nachgeschalteten Zwischenkreis-Kondensator (C_{Zk}) aufweist, wobei die Induktivität (L) über einen steuerbaren elektronischen Schalter (T9) getaktet mit der pulsierenden Gleichspannung (U_{G}) beaufschlagbar ist.

8. Steuersystem nach Anspruch 7,
**gekennzeichnet durch** einen Spannungsregler (20), der in Abhängigkeit von der jeweils aktuellen Zwischenkreisspannung (U_{Z}) sowie in Abhängigkeit von der vorbestimmten Grenzspannung (U1/U2) den elektronischen Schalter (T9) zur Taktung der Induktivität (L) mit einem variablen Taktverhältnis pulsweitenmoduliert ansteuert.

9. Steuersystem nach Anspruch 7 oder 8,
**dadurch gekennzeichnet, dass** die Induktivität(L)vonim Elektromotor (2) vorhandenen Streuinduktivitäten (Ls1 - Ls3) von Motor-Wickelköpfen gebildet ist.

10. Steuersystem nach Anspruch 9,
**dadurch gekennzeichnet, dass** die Steuerung (20) den Hochsetzsteller (18) nur in Phasen der Kommutierung aktiviert, in denen alle Wicklungen (U, V, W) des Elektromotors (2) kurzgeschlossen sind.
